# EUROPEAN PATENT SPECIFICATION

(11) **EP 3 392 001 B1**
(45) Date of publication and mention of the grant of the patent: **17.08.2022**
(21) Application number: 18155603.6
(22) Date of filing: 07.02.2018
(51) Int. Cl.: B25J 9/16

(54) **ROBOT SYSTEM**
ROBOTERSYSTEM
SYSTÈME DE ROBOT

(30) Priority: 21.04.2017 JP 2017084358
(43) Date of publication of application: 24.10.2018
(73) Proprietor: OMRON CORPORATION, Kyoto-shi, Kyoto 600-8530 (JP)
(72) Inventor: HIGUCHI, Toshiyuki, Kyoto, 600-8530 (JP); TANI, Yoshiharu, Kyoto, 600-8530 (JP); AKAGI, Tetsuya, Kyoto, 600-8530 (JP)
(74) Representative: 2K Patentanwälte Blasberg Kewitz & Reichel

(56) References cited:
- US-A1- 2006 049 939
- US-A1- 2016 224 012
- Sandor Szabo ET AL: "A Testbed for Evaluation of Speed and Separation Monitoring in a Human Robot Collaborative Environment", National Institute of Standards and Technology, 1 March 2012 (2012-03-01), XP055472373, Gaithersburg, MD DOI: 10.6028/NIST.IR.7851 Retrieved from the Internet: URL:https://ws680.nist.gov/publication/get _pdf.cfm?pub_id=910293 [retrieved on 2018-05-03]

## Description

### BACKGROUND

### Technical Field

The present invention relates to a robot system that is operated by a program.

### Description of Related Art

Robot systems including an arm that can be operated to perform an operation are known in the related art. For such robot systems, techniques for preventing an arm from colliding with other operators during operation are known.

US 2016/224012 A1 discloses sensor-based safety features for robotic equipment, and the implementation thereof. One or more sensors may be positioned relative to the robotic equipment such that the sensors may capture light from at least a portion of an environment surrounding the robotic equipment. In some examples, the sensors may be integrated with the robotic equipment and/or may be configured to rotate. An analysis module coupled to the sensors may build a model image of the environment based on the light captured by the sensors. The analysis module may detect that an unintended object is approaching the robotic equipment in response to detecting a change in the model image, and based on a proximity and/or a speed of approach of the object to the robotic equipment, the analysis module may instruct the robotic equipment to reduce an operating speed and/or stop motion of the robotic equipment.

US 2006/049939 A1 discloses an apparatus for the control of at least one safety-relevant function of a machine having a machine control for the control of the movements of the machine, having at least one sensor for the sensing of an object inside a monitored zone and having an evaluation unit for the setting of a danger zone and for the triggering of the safety-relevant function on the intrusion of the sensed object into the danger zone. To set the danger zone, the evaluation unit is coupled to the machine control and the evaluation unit is designed for the derivation of the parameters required for the setting of the danger zone starting from the control signals used by the machine control for the movement control of the machine. A corresponding method is furthermore described.

JP 2014/176932 A discloses a robot system in which, regarding a predetermined range region set around a robot according to an operation speed of the robot, when it is detected that a moving subject is present in the region, an abnormality is determined, and a process (stopping an operation of a robot, transmitting an alarm, and reducing an operation speed of an operation arm) is performed according to the abnormality determination.

JP 2015/526309 A discloses a robot that generally operates at a speed that is equal to or lower than a first threshold value, and when the torso or head of a human is detected in a critical region defined in a detection region set around the robot, the robot operates at a speed that is equal to or lower than a second threshold value.

### SUMMARY

In all of the techniques of the related arts described above, when a moving subject is detected in a region set around the robot, an operation of the arm is set to be different from usual, collision of the moving subject with the arm being prevented. However, in such techniques of the related art, since there is a risk of a region in which collision does not actually occur being determined as a determination target, there is a problem of operation efficiency being lowered.

An object of an aspect of the present invention is to provide a robot system that maintains productivity with high safety and with high operation efficiency.

A robot system according to independent claim 1 includes an arm operation control unit configured to control an operation of an arm; and a moving subject detection unit configured to detect whether a moving subject is present in an operation direction region set according to an operation direction of the arm and is present in an operation range of the arm. The robot system further comprises: a moving subject position range monitoring unit configured to monitor whether the moving subject is present in a moving subject position range set outside the operation range of the arm, whereby the arm operation control unit operates the arm at a first operation speed when the moving subject detection unit has detected the moving subject; whereby the arm operation control unit operates the arm at a second operation speed that is different from the first operation speed of the arm when the moving subject detection unit has not detected the moving subject and the moving subject position range monitoring unit has detected the moving subject; whereby the arm operation control unit operates the arm at the first operation speed when the moving subject detection unit has not detected the moving subject and the moving subject position range monitoring unit has not detected the moving subject.

Preferred embodiments are defined by the dependent claims:

In the robot system according to an aspect of the present invention, the operation direction region may be set such that it includes a target position of at least one arm described in a program that defines an operation of the arm.

In the robot system according to an aspect of the present invention, the operation direction region may be set by prefetching a target position of at least one arm described in the program that defines an operation of the arm from a current step of a program that is executing an operation of the arm.

The robot system according to an aspect of the present invention further includes a warning transmission unit configured to transmit a warning to the outside, and when the moving subject detection unit has detected the moving subject, the warning transmission unit may transmit the warning.

In the robot system according to an aspect of the present invention, when the moving subject detection unit has detected the moving subject, the arm operation control unit may stop an operation of the arm

In the robot system according to an aspect of the present invention, when an operation of the arm is stopped and then the moving subject detection unit has not detected the moving subject in an operation direction of the arm, the arm operation control unit may restart an operation of the arm in the operation direction.

In the robot system according to an aspect of the present invention, the moving subject detection unit may detect whether a moving subject is present in the operation direction region set according to an operation direction of the arm on the basis of a captured image captured by a camera.

According to an aspect of the present invention, there is an effect that it is possible to provide a robot system that maintains productivity with high safety and with high operation efficiency.

### BRIEF DESCRIPTION OF THE DRAWINGS

FIG. 1 is a block diagram showing an example of a main part configuration of a robot system according to Embodiment 1
FIG. 2 is a schematic diagram showing an overview of the robot system according to Embodiment 1
FIG. 3 is a bird's-eye view of the robot system according to Embodiment 1 when viewed from above.
FIG. 4 is a bird's-eye view of the robot system according to Embodiment 1 viewed from above.
FIG. 5 is a flowchart showing an example of a process performed by the robot system according to Embodiment 1
FIG. 6 is a flowchart showing an example of a process performed by a robot system according to Embodiment 2
FIG. 7A and FIG. 7B show bird's-eye views of a robot system according to Embodiment 3 when viewed from above, FIG. 7A shows a case in which an operator is present in a robot operation range in an operation direction of an operation arm, and FIG. 7B shows a case in which an operator is present outside a robot operation range in an operation direction of an operation arm.
FIG. 8 is a flowchart showing an example of a process performed by a robot system according to Embodiment 3
FIG. 9A and FIG. 9B show bird's-eye views of a robot system according to Embodiment 4 when viewed from above, FIG. 9A shows a case in which an operator is present in a robot operation range in an operation direction of an operation arm and FIG. 9B shows a case in which an operator is present outside a robot operation range in an operation direction of an operation arm.
FIG. 10 is a flowchart showing an example of a process performed by a robot system according to Embodiment 4

### DESCRIPTION OF THE EMBODIMENTS

### [Embodiment 1]

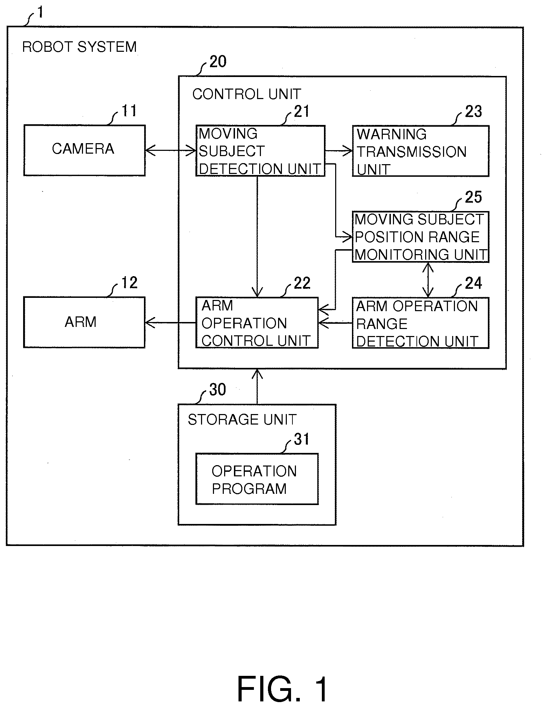

Embodiments will be described below in detail with reference to FIGS. 1 to 5. The embodiments are only for illustrative purposes and do not limit or define the scope of protection. The invention and the scope of protection is defined in the appended claims.

### (Configuration of robot system)

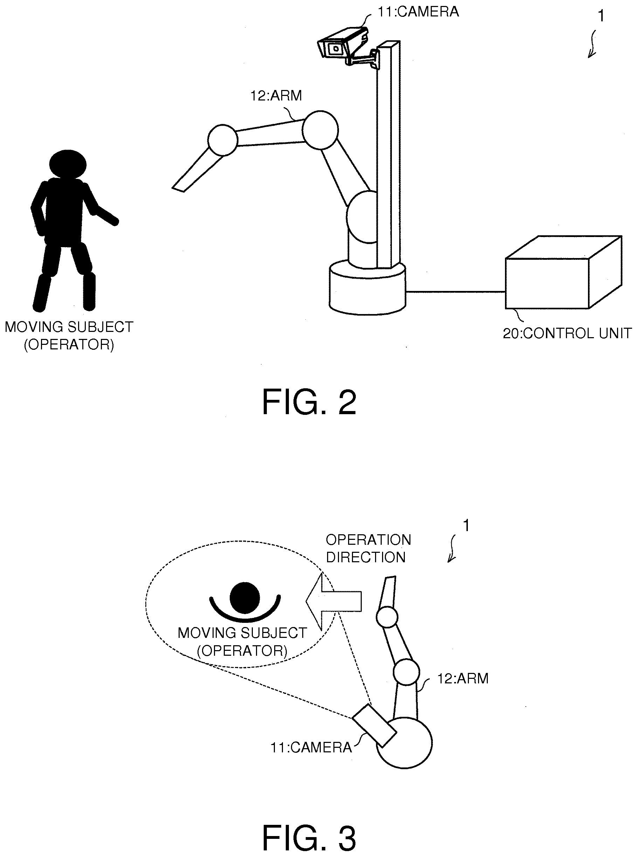

An overview and a configuration of a robot system 1 according to the present embodiment will be described with reference to FIGS. 1 and 2. FIG. 1 is a block diagram showing an example of a main part configuration of the robot system 1. FIG. 2 is a schematic diagram showing an overview of the robot system 1.

First, an overview of the robot system 1 will be described with reference to FIG. 2. In the shown example, the robot system can image a moving subject such as an operator using a camera 11 fixed to a supporting column that extends from a pedestal. In addition, the robot system 1 can be operated by operating an arm 12 supported on the pedestal. The above process is controlled by a control unit 20 included in the robot system 1.

Next, a configuration of the robot system 1 will be described with reference to FIG. 1. In the shown example, the robot system 1 includes the camera 11, the arm 12, the control unit 20, and a storage unit 30. The control unit 20 includes a moving subject detection unit 21 and an arm operation control unit 22. In addition, the storage unit 30 includes an operation program 31. Here, in FIG. 1, in addition to this configuration, a warning transmission unit 23, an arm operation range detection unit 24, and a moving subject position range monitoring unit 25 are shown. However, such units are not necessary in the present embodiment. Details of such units will be described in Embodiments 2 to 4 to be described below.

The robot system 1 can operate units according to the operation program 31. More specifically, the robot system 1 can operate the camera 11 and the arm 12 according to the operation program 31.

Here, although not shown, the control unit 20 may be connected to an upper-level device, for example, a controller, through communication, and may change operation content in the operation program 31 according to an instruction from the controller. In addition, an actual operation state of the arm 12, imaging data of the camera 11, and the like may be transmitted to the controller.

When the arm 12 operates, the robot system 1 can set an operation direction region according to an operation direction of the arm 12 and image the operation direction region using the camera 11. Here, the operation direction region is a region set in a direction in which the arm 12 operates, and when a moving subject is present in the operation direction region, the operation direction region is a predetermined region in which the moving subject may collide with the arm 12. In other words, the operation direction region is a region set for the arm 12 in a direction (operation side) in which the arm 12 has started operating. That is, when the arm 12 operates, the operation direction region includes a range in which the arm 12 operates from a current position set by the control unit 20 to a target position. On the other hand, a region on the side opposite to a direction in which the arm 12 has started operating is not included. In addition, the control unit 20 may continuously set at least one target position. In this case, the operation direction region may be set such that it includes a target position of at least one arm 12 described in the operation program 31. In this case, preferably, the control unit 20 prefetches and sets a target position of at least one arm 12 described in the operation program 31 from a current step of the operation program 31 that executes an operation of the arm 12. The robot system 1 determines whether a moving subject such as an operator is present in the operation direction region from a captured image captured by the camera 11. When it is determined that a moving subject is present, the robot system 1 can operate the arm 12 at an operation speed that is different from an operation speed when it is determined that the moving subject is not present in the operation direction region.

The camera 11 can operate according to the operation program 31. The camera 11 can image the operation direction region of the arm 12 according to an instruction from the control unit 20 that has read the operation program 31 and transmit the captured image to the moving subject detection unit 21. In the shown example, while there is a configuration in which the camera 11 is included in the robot system 1, any configuration may be used as long as the captured image obtained by imaging the operation direction region of the arm 12 can be transmitted to the moving subject detection unit 21. For example, the robot system 1 may have a configuration in which a captured image captured by an external camera is acquired through communication.

The arm 12 is a part that the robot system 1 uses for operation. The arm 12 may be, for example, a flexible arm including plurality of joints. The arm 12 can operate under control of the arm operation control unit 22.

The storage unit 30 can store various types of data handled by the robot system 1. In the shown example, the storage unit 30 includes at least the operation program 31.

The operation program 31 is a program in which there is description of a process necessary for operation of the robot system 1. The operation program 31 can be read by the control unit 20 and the control unit 20 can operate units according to the description content.

The control unit 20 collectively controls units of the robot system 1. The control unit 20 can determine an operation direction of the arm 12. When an operation direction of the arm 12 is determined, the control unit 20 can cause the moving subject detection unit 21 to check whether a moving subject such as an operator is present in the operation direction region. The control unit 20 can instruct the arm operation control unit 22 to operate the arm 12 in an operation direction. Here, in FIG. 1, there is a configuration in which the control unit 20 is included in the robot system 1, but it may be disposed outside a casing as shown in FIG. 2 as long as there is a configuration in which the camera 11 and the arm 12 can be operated.

The moving subject detection unit 21 can detect whether a moving subject such as an operator is present in the operation direction region according to an instruction of the control unit 20. The moving subject detection unit 21 can transmit the detection result to the arm operation control unit 22. Here, as long as the moving subject detection unit 21 can detect whether a moving subject is present, an object used for detection is not necessarily limited to an image captured by the camera 11. For example, using a laser scanner that scans a predetermined region using a laser beam and detects inclusion of a moving subject according to whether there is reflected light, a detection result of the laser scanner may be transmitted to the arm operation control unit 22.

The arm operation control unit 22 can operate the arm 12 according to an instruction from the control unit 20. The arm operation control unit 22 can vary an operation speed of the arm 12 according to whether the moving subject detection unit 21 has detected a moving subject. More specifically, when the moving subject detection unit 21 has detected the moving subject, the arm operation control unit 22 can operate the arm 12 at an operation speed that is different from an operation speed of the arm 12 when no moving subject has been detected.

### (Positional relationship between robot system and moving subject)

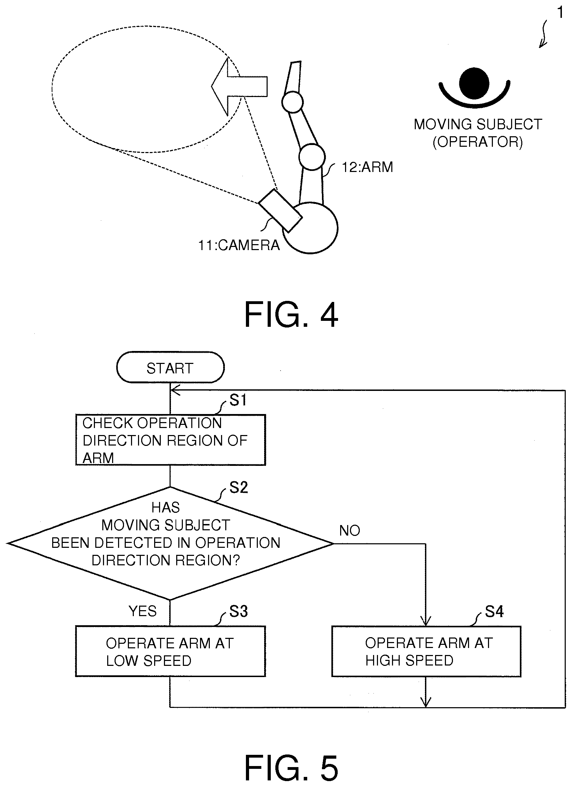

A positional relationship between the robot system 1 and a moving subject in a robot system according to the present embodiment will be described with reference to FIGS. 3 and 4. FIGS. 3 and 4 are bird's-eye views of a robot system when viewed from above. Here, in the shown example, while an operator is described as a moving subject, the present invention is not necessarily limited thereto.

FIG. 3 shows a case in which an operator is present in an operation direction region set in an operation direction of the arm 12. When the camera 11 images the operation direction region, since the operator is included in the captured image, the moving subject detection unit 21 can detect the presence of the operator. In this case, when the arm 12 operates, there is a risk of the arm 12 colliding with the operator. Therefore, for example, the arm operation control unit 22 secures a time margin for the operator to move by operating the arm 12 at a speed lower than a normal operation speed and can reduce an impact applied to a victim when the arm 12 collides with the operator.

FIG. 4 shows a case in which no operator is present in an operation direction region set in an operation direction of the arm 12. Therefore, when the camera images the operation direction region, the operator is not included in the captured image. In this case, even if the arm 12 operates, the arm 12 does not collide with the operator. Therefore, for example, when the arm operation control unit 22 causes the arm 12 to operate at a normal operation speed, it is possible to increase operation efficiency.

### (Flow of processes)

A flow of processes performed by the robot system 1 according to the present embodiment will be described with reference to FIG. 5. FIG. 5 is a flowchart showing an example of a process performed by the robot system 1.

First, when the arm operation control unit 22 determines the arm 12 is to be operated and starts the operation, the control unit 20 sets an operation direction region in an operation direction of the arm 12, and then checks whether a moving subject is present in the operation direction region of the arm using the moving subject detection unit 21 (S1). Then, the control unit 20 determines whether the moving subject detection unit 21 has detected a moving subject in the operation direction region of the arm (S2). When it is determined that a moving subject has been detected (YES in S2), the arm operation control unit 22 operates the arm 12 at a low speed (S3). After S3, the arm operation control unit 22 waits until the next operation of the arm 12 is input.

On the other hand, when it is determined in S2 that no moving subject has been detected in the operation direction region (NO in S2), the arm operation control unit 22 operates the arm 12 at a high speed in the same manner as usual (S4). After S4, the arm operation control unit 22 waits until the next operation of the arm 12 is input.

According to the above process, when a moving subject is present, for example, an operator, in a direction in which the arm 12 moves, the robot system 1 can operate the arm at an operation speed that is different from that when no moving subject is present. Therefore, it is possible to set a time margin for the operator to move from the operation direction region, but when no operator is present in the operation direction region, it is possible to operate the arm at a normal speed. Therefore, there is an effect that it is possible to provide a robot system that maintains productivity with high safety and with high operation efficiency.

Here, in the above description, the robot system 1 is configured to detect a moving subject using a captured image captured by one camera 11. However, for example, the robot system 1 may detect a moving subject by combining captured images captured by a plurality of cameras. In this case, the control unit 20 may set a height in the operation direction region using a plurality of captured images. That is, the control unit 20 may set the operation direction region according to the height of the arm 12 with respect to the ground.

### [Embodiment 2]

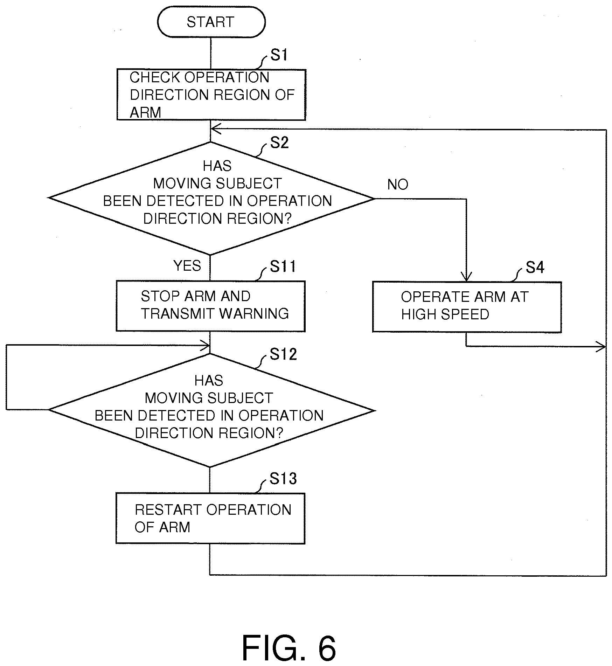

Embodiment 2 will be described below with reference to FIGS. 1 and 6. Here, for convenience of description, units having the same functions as the units described in the above embodiment will be denoted with the same reference numerals and descriptions thereof will be omitted.

### (Configuration of robot system)

A configuration of the robot system 1 according to the present embodiment will be described with reference to FIG. 1.

A basic configuration of the robot system 1 is the same as that of Embodiment 1, but a part of the configuration is different. In the present embodiment, the robot system 1 further includes the warning transmission unit 23.

When it is detected that a moving subject such as an operator is present in the operation direction region, the robot system 1 can transmit a warning using the warning transmission unit 23. In addition, when the moving subject detection unit 21 detects that a moving subject such as an operator is present in the operation direction region of the arm 12, the robot system 1 can stop an operation of the arm 12. In addition, when an operation of the arm 12 is stopped and then the moving subject detection unit 21 does not detect a moving subject such as an operator in the operation direction region of the arm 12, the robot system 1 can restart an operation of the arm 12 in an initially set operation direction.

When the moving subject detection unit 21 detects a moving subject such as an operator in the operation direction region of the arm 12, the warning transmission unit 23 can transmit a warning to the outside. Here, the warning may have any form as long as the moving subject can detect the warning. For example, a sound warning may be used or a light or text warning may be used

### (Flow of processes)

A flow of processes performed by the robot system 1 according to the present embodiment will be described with reference to FIG. 6. FIG. 6 is a flowchart showing an example of a flow of processes performed by the robot system 1.

The processes of S1 and S2 are the same as those in Embodiment 1.

In S2, when it is determined that a moving subject has been detected (YES in S2), the arm operation control unit 22 stops an operation of the arm 12 and the warning transmission unit 23 transmits a warning (S11). Then, the control unit 20 determines whether a moving subject has been detected in the operation direction region of the arm 12 (S12). When it is determined that no moving subject has been detected in the operation direction region (NO in S12), the arm operation control unit 22 restarts an operation of the arm 12. On the other hand, when it is determined in S12 that a moving subject has been detected in the operation direction region (YES in S12), the arm operation control unit 22 waits until no moving subject has been detected in the operation direction region.

On the other hand, when it is determined in S2 that no moving subject has been detected in the operation direction region (NO in S2), the arm operation control unit 22 operates the arm 12 at a high speed in the same manner as in Embodiment 1 (S4). After S4, the arm operation control unit 22 waits until the next operation of the arm 12 is input.

According to the above process, when a moving subject such as an operator is present in a direction in which the arm 12 moves, the robot system 1 transmits a warning to the outside and stops an operation of the arm 12. Therefore, the operator can move from a position in an operation direction of the arm on the basis of the warning. In addition, when it is detected that a moving subject such as an operator is away from the position in an operation direction of the arm 12, the robot system 1 restarts an operation of the arm 12. Therefore, there is an effect that it is possible to provide the robot system 1 that has high safety and also continues an operation and obtains high operation efficiency.

Here, in the above process, the arm operation control unit 22 is configured to stop an operation of the arm 12 when a moving subject is detected in the operation direction region of the arm 12. However, the arm operation control unit 22 may have any configuration as long as it can curb collision of the arm 12 with a moving subject. For example, the arm operation control unit 22 may be configured to, when the moving subject detection unit 21 detects a moving subject, operate the arm 12 at a different operation speed, and then when the moving subject detection unit 21 detects no moving subject, change an operation speed of the arm 12 to a speed before change. In addition, the arm operation control unit 22 may perform only control of an operation of the arm 12 without causing the warning transmission unit 23 to transmit a warning.

### [Embodiment 3]

Embodiment 3 will be described below with reference to FIGS. 1, 7A, 7B and 8. Here, for convenience of description, units having the same functions as the units described in the above embodiment will be denoted with the same reference numerals and descriptions thereof will be omitted.

### (Configuration of robot system)

A configuration of the robot system 1 according to the present embodiment will be described with reference to FIG. 1.

A basic configuration of the robot system 1 is the same as that of Embodiment 1, but a part of the configuration is different. In the present embodiment, the robot system 1 further includes the arm operation range detection unit 24.

When the moving subject detection unit 21 detects that a moving subject is present in an operation direction region and in an operation range of the arm 12 detected by the arm operation range detection unit 24, the robot system 1 can operate the arm 12 at an operation speed that is different from a normal speed.

The arm operation range detection unit 24 can detect an operation range in which the arm 12 operates. The operation range may be a maximum range in which the arm 12 can move, and may be a range according to an operation of the arm 12 set by the arm operation control unit 22.

The moving subject detection unit 21 can detect whether a moving subject is present in an operation direction region and an operation range of the arm 12 detected by the arm operation range detection unit 24.

### (Positional relationship between operation direction region and operation range of arm)

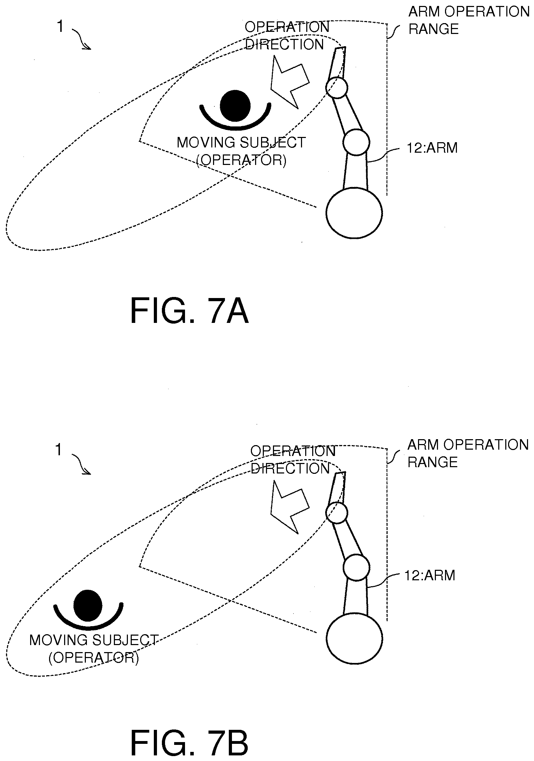

In the present embodiment, a positional relationship between an operation direction region and an operation range of the arm 12 used when the moving subject detection unit 21 detects a moving subject will be described with reference to FIG. 7A and FIG. 7B. FIG. 7A and FIG. 7B shows bird's-eye views of the robot system 1 when viewed from above, FIG. 7A shows a case in which an operator is present in the operation direction region of the arm 12 and in an operation range of the arm 12, and FIG. 7B shows a case in which an operator is present in an operation direction region of the arm 12 and outside an operation range of the arm 12.

In FIG. 7A, the operation direction region is shown as an elliptical region in an operation direction of the arm 12. In addition, the operation range of the arm 12 is shown as a fan-shaped region with a foundation of the robot system 1 as its origin. As shown in the drawing, the operation range of the arm 12 is set such that it partially overlaps the operation direction region. When the moving subject detection unit 21 detects that an operator is present in a region in which the operation direction region overlaps the operation range of the arm 12, the robot system 1 determines that there is a risk of the arm 12 colliding with the operator according to an operation of the arm 12. In this case, the arm operation control unit 22 can set an operation speed of the arm 12 that is different from a normal speed.

FIG. 7B shows a case in which an operator is in a range of an operation direction region but he or she is at a position that is not included in the operation range of the arm 12. When the moving subject detection unit 21 detects an operator present at such a position, the robot system 1 determines that there is no risk of the arm 12 colliding with the operator according to an operation of the arm 12. In this case, the arm operation control unit 22 can operate the arm 12 at a high speed in the same manner as usual.

According to the above configuration, the robot system 1 according to the present embodiment can more accurately determine whether the arm 12 will collide with an operator.

### (Flow of processes)

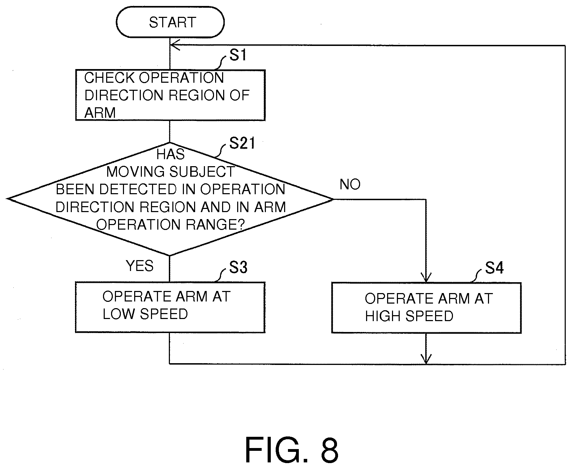

A flow of processes performed by the robot system 1 according to the present embodiment will be described with reference to FIG. 8. FIG. 8 is a flowchart showing an example of a flow of processes performed by the robot system 1.

The process of S1 is the same as that of the above embodiments. After S1, the control unit 20 determines whether the moving subject detection unit 21 has detected a moving subject that is in an operation direction region and in an operation range of the arm (S21). When it is determined that a moving subject has been detected (YES in S21), the arm operation control unit 22 performs the process of S3 in the same manner as in the above embodiment. After S3, the arm operation control unit 22 waits until the next operation of the arm 12 is input.

On the other hand, when it is determined in S21 that no moving subject has been detected (S21), the arm operation control unit 22 performs the process of S4 in the same manner as in the above embodiment. After S4, the arm operation control unit 22 waits until the next operation of the arm 12 is input.

According to the above configuration, when a moving subject such as an operator is present in an operation direction region of the arm 12 and in an operation range of the arm 12, the robot system 1 can operate the arm 12 at an operation speed that is different from an operation speed when no operator is present. When an operator is present in the operation direction region of the arm 12 but he or she is present outside the operation range, if the arm 12 operates, since there is no risk of the operator colliding with the arm, the arm 12 can operate at a normal operation speed. Therefore, there is an effect that it is possible to provide the robot system 1 with higher operation efficiency in which a decrease in production efficiency is curbed by changing an operation speed of the arm 12 according to an operation range of the arm 12.

### [Embodiment 4]

Embodiment 4 will be described below with reference to FIGS. 1, and 9A, 9B to 10. Here, for convenience of description, units having the same functions as the units described in the above embodiment will be denoted with the same reference numerals and descriptions thereof will be omitted.

### (Configuration of robot system)

A configuration of the robot system 1 according to the present embodiment will be described with reference to FIG. 1.

A basic configuration of the robot system 1 is the same as that of Embodiment 3, but a part of the configuration is different. In the present embodiment, the robot system 1 further includes the moving subject position range monitoring unit 25.

The robot system 1 can determine using the moving subject position range monitoring unit 25 whether a moving subject such as an operator is present in a moving subject position range set outside the operation range of the arm 12 detected by the arm operation range detection unit 24. The robot system 1 can vary an operation speed of the arm 12 according to the determination result.

The moving subject position range monitoring unit 25 can monitor whether a moving subject such as an operator is present in a moving subject position range. The moving subject position range may be set at any position as long as it is outside the operation range of the arm 12, but it is preferably set such that it includes a position at which an operator performs a routine operation. For example, the moving subject position range monitoring unit 25 may image a region including the moving subject position range using the camera 11 and determine whether the captured image includes a moving subject such as an operator.

### (Positional relationship between moving subject position range and operator)

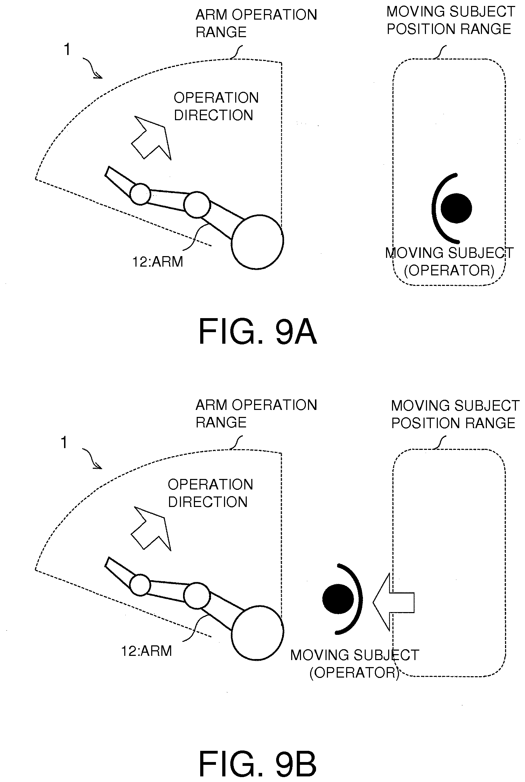

In the present embodiment, a positional relationship between a moving subject position range and an operator when the moving subject position range monitoring unit 25 monitors whether a moving subject is present will be described with reference to FIG. 9A and FIG. 9B. FIG. 9A and FIG. 9B shows bird's-eye views of the robot system 1 when viewed from above, FIG. 9A shows a case in which an operator is present in a moving subject position range, and FIG. 9B shows a case in which an operator has moved from inside to outside of the moving subject position range.

FIG. 9A shows a case in which a moving subject position range is set outside an operation range of the arm 12 and is set before the arm 12 moves according to an operation, and an operator who is a moving subject is present in the moving subject position range. When the moving subject position range monitoring unit 25 detects that an operator is present in the moving subject position range, the robot system 1 determines that there is no risk of the arm 12 colliding with the operator according to an operation of the arm 12. In this case, the arm operation control unit 22 can operate the arm 12 at a high speed in the same manner as usual.

FIG. 9B shows a case in which a moving subject position range is set outside an operation range of the arm 12 and is set before the arm 12 moves according to an operation, and an operator who is a moving subject has moved from inside to outside of the moving subject position range. When the moving subject position range monitoring unit 25 detects that no operator is present in the moving subject position range, the robot system 1 determines that there is a risk of the arm 12 colliding with the operator according to an operation of the arm 12. For example, when the operator present in the moving subject position range has moved outside of the moving subject position range and additionally moved into the operation range of the arm 12, there is a risk of the arm 12 colliding with the operator. In this case, the arm operation control unit 22 can set an operation speed of the arm 12 that is different from a normal speed.

According to the above configuration, the robot system 1 according to the present embodiment can operate the arm 12 at a high speed when an operator is present at a position at which a routine operation is performed and can operate the arm 12 at a low speed when an operator is away from the position at which a routine operation is performed according to a non-routine operation.

### (Flow of processes)

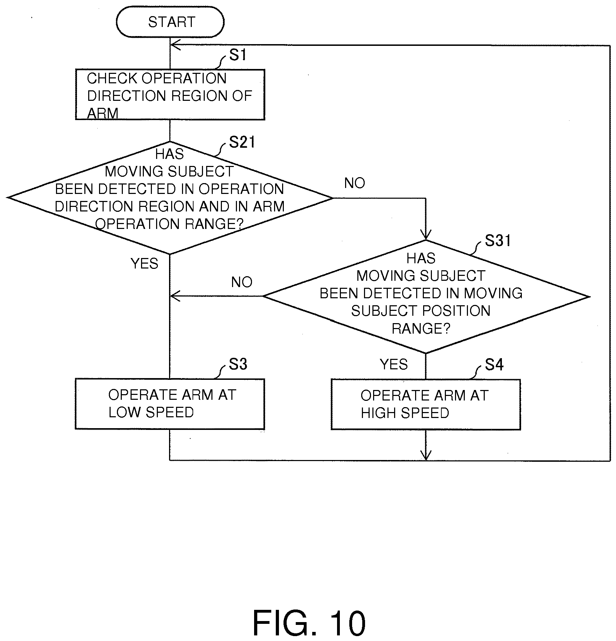

A flow of processes performed by the robot system 1 according to the present embodiment will be described with reference to FIG. 10. FIG. 10 is a flowchart showing an example of a flow of processes performed by the robot system 1.

The processes of S1 and S21 are the same as those in Embodiment 3. When it is determined in S21 that the control unit 20 has detected a moving subject (YES in S21), the arm operation control unit 22 performs the process of S3 in the same manner as in the above embodiment. After S3, the arm operation control unit 22 waits until the next operation of the arm 12 is input.

On the other hand, when it is determined in S21 that no moving subject has been detected (S21), the moving subject position range monitoring unit 25 determines whether a moving subject has been detected in the moving subject position range (S31). When it is determined that the moving subject has been detected in the moving subject position range (YES in S31), the arm operation control unit 22 performs the process of S4 in the same manner as in the above embodiment. After S4, the arm operation control unit 22 waits until the next operation of the arm 12 is input. When it is determined in S31 that no moving subject has been detected in the moving subject position range (NO in S31), the arm operation control unit 22 performs the process of S3 in the same manner as in the above embodiment. After S3, the arm operation control unit 22 waits until the next operation of the arm 12 is input.

According to the above configuration, when a moving subject such as an operator is not in the moving subject position range, the robot system 1 can operate the arm 12 at an operation speed that is different from an operation speed when an operator is in the moving subject position range. When an operator leaves the moving subject position range in which the operator performs an operation in a routine state, there is a risk of the operator accidentally entering the operation range of the arm. Therefore, when no operator is present in the moving subject position range, the arm 12 can operate at an operation speed that is different from a normal operation speed. Therefore, there is an effect that it is possible to provide the robot system 1 with higher safety through which, even during a non-routine operation when an operator is outside the moving subject position range, it is possible prevent collision with the operator in advance and operate the arm safely.

### [Example of implementation by software]

Control blocks (in particular, the moving subject detection unit 21 and the arm operation control unit 22) of the robot system 1 may be implemented by a logic circuit (hardware) formed in an integrated circuit (IC chip) and the like and may be implemented by software using a central processing unit (CPU).

In the latter case, the robot system 1 includes a CPU that executes an instruction of a program which is software for implementing functions, a read only memory (ROM) or a storage device (these are referred to as a "recording medium") in which the program and various types of data that can be read by a computer (or a CPU) are recorded, a random access memory (RAM) that opens the program, and the like. Thus, when the computer (or a CPU) reads and executes the program from the recording medium, the object of the present invention is achieved. As the recording medium, "non-transitory tangible media," for example, a tape, a disk, a card, a semiconductor memory, and a programmable logic circuit can be used. In addition, the program may be supplied to the computer through an arbitrary transmission medium (such as a communication network and broadcast waves) that can transmit the program. Here, in an aspect the program may be implemented in the form of a data signal combined with carrier waves embodied according to electronic transmission.

### [Reference Signs List]

- 1: Robot system
- 11: Camera
- 12: Arm
- 20: Control unit
- 21: Moving subject detection unit
- 22: Arm operation control unit
- 23: Warning transmission unit
- 24: Arm operation range detection unit
- 25: Moving subject position range monitoring unit
- 30: Storage unit
- 31: Operation program

## Claims

1. A robot system (1) comprising:
an arm operation control unit (22) configured to control an operation of an arm (12); and
a moving subject detection unit (21) configured to detect whether a moving subject is present in an operation direction region set according to an operation direction of the arm (12) and in an operation range of the arm (12),
the robot system (1) further comprising:
a moving subject position range monitoring unit (25) configured to monitor whether the moving subject is present in a moving subject position range set outside an operation range of the arm (12),
whereby the arm operation control unit (22) is configured to operate the arm (12) at a first operation speed when the moving subject detection unit (21) has detected the moving subject;
whereby the arm operation control unit (22) is configured to operate the arm (12) at a second operation speed that is different from the first operation speed of the arm (12) when the moving subject detection unit (21) has not detected the moving subject and the moving subject position range monitoring unit (25) has detected the moving subject;
whereby the arm operation control unit (22) is configured to operate the arm (12) at the first operation speed when the moving subject detection unit (21) has not detected the moving subject and the moving subject position range monitoring unit (25) has not detected the moving subject.

2. The robot system (1) according to claim 1,
wherein the operation direction region is set such that it includes a target position of at least one arm (12) described in a program that defines an operation of the arm (12).

3. The robot system (1) according to claim 2,
wherein the operation direction region is set by prefetching a target position of at least one arm (12) described in the program that defines an operation of the arm (12) from a current step of a program that is executing an operation of the arm (12).

4. The robot system (1) according to any one of claims 1 to 3, further comprising a warning transmission unit (23) configured to transmit a warning,
wherein, when the moving subject detection unit (21) has detected the moving subject, the warning transmission unit (23) transmits the warning.

5. The robot system (1) according to any one of claims 1 to 3,
wherein, when the moving subject detection unit (21) has detected the moving subject, the arm operation control unit (22) stops an operation of the arm (12) or operates the arm (12) at a low speed.

6. The robot system (1) according to claim 5,
wherein, when an operation of the arm (12) is stopped or the arm (12) operates at a low speed and then the moving subject detection unit (21) has not detected the moving subject in an operation direction of the arm (12), the arm operation control unit (22) restarts an operation of the arm (12) in the operation direction or operates the arm (12) at a normal speed.

7. The robot system (1) according to any one of claims 1 to 6,
wherein the moving subject detection unit (21) detects whether a moving subject is present in the operation direction region set according to an operation direction of the arm (12) on the basis of a captured image captured by a camera.

## Patentansprüche

1. Robotersystem (1), umfassend:
eine Steuerungseinheit (22) für den Betrieb eines Arms, die konfiguriert ist, einen Betrieb eines Arms (12) zu steuern; und
eine Erfassungseinheit (21) für sich bewegende Objekte, die konfiguriert, zu erfassen, ob sich ein sich bewegendes Objekt in einem Betriebsrichtungsbereich, der entsprechend einer Betriebsrichtung des Arms (12) eingestellt ist, und in einem Betriebsbereich des Arms (12) befindet,
wobei das Robotersystem (1) ferner umfasst:
eine Überwachungseinheit (25) für den Positionsbereich des sich bewegenden Objekts, die konfiguriert ist, zu sie überwachen, ob sich das sich bewegende Objekt in einem Positionsbereich des sich bewegenden Objekts befindet, der außerhalb eines Betriebsbereichs des Arms (12) festgelegt ist,
wobei die Steuerungseinheit (22) für den Betrieb des Arms konfiguriert ist, den Arm (12) mit einer ersten Betriebsgeschwindigkeit zu betreiben, wenn die Erfassungseinheit (21) für das sich bewegende Objekt das sich bewegende Objekt erfasst hat;
wobei die Steuerungseinheit (22) für den Betrieb des Arms konfiguriert ist, den Arm (12) mit einer zweiten Betriebsgeschwindigkeit zu betreiben, die sich von der ersten Betriebsgeschwindigkeit des Arms (12) unterscheidet, wenn die Erfassungseinheit (21) für sich bewegende Objekte das sich bewegende Objekt nicht erfasst hat und die Überwachungseinheit (25) für den Positionsbereich des sich bewegenden Objekts das sich bewegende Objekt erfasst hat;
wobei die Steuerungseinheit (22) für den Betrieb des Arms konfiguriert ist, den Arm (12) mit der ersten Betriebsgeschwindigkeit zu betreiben, wenn die Erfassungseinheit (21) für das sich bewegende Objekt das sich bewegende Objekt nicht erfasst hat und die Überwachungseinheit (25) für den Positionsbereich des sich bewegenden Objekts das sich bewegende Objekt nicht erfasst hat.

2. Robotersystem (1) nach Anspruch 1,
wobei der Betriebsrichtungsbereich so eingestellt ist, dass er eine Zielposition mindestens eines Arms (12) umfasst, die in einem Programm beschrieben ist, das einen Betrieb des Arms (12) definiert.

3. Robotersystem (1) nach Anspruch 2,
wobei der Betriebsrichtungsbereich eingestellt wird, indem eine Zielposition mindestens eines Arms (12), die in dem Programm, das einen Betrieb des Arms (12) definiert, beschrieben ist, aus einem aktuellen Schritt eines Programms, das einen Betrieb des Arms (12) ausführt, vorab abgerufen wird.

4. Robotersystem (1) nach einem der Ansprüche 1 bis 3, ferner umfassend
eine Warnübertragungseinheit (23), die konfiguriert ist, eine Warnung zu übertragen, wobei die Warnübertragungseinheit (23) die Warnung überträgt, wenn die Erfassungseinheit (21) für das sich bewegende Objekt das sich bewegende Objekt erfasst hat.

5. Robotersystem (1) nach einem der Ansprüche 1 bis 3,
wobei, wenn die Einheit (21) zur Erfassung des sich bewegenden Objekts das sich bewegende Objekt erfasst hat, die Steuerungseinheit (22) für den Betrieb des Arms (12) einen Betrieb des Arms (12) stoppt oder den Arm (12) mit einer niedrigen Geschwindigkeit betreibt.

6. Robotersystem (1) nach Anspruch 5,
wobei, wenn ein Betrieb des Arms (12) gestoppt wird oder der Arm (12) mit einer niedrigen Geschwindigkeit betrieben wird und dann die Erfassungseinheit (21) für das sich bewegende Objekt das sich bewegende Objekt in einer Betriebsrichtung des Arms (12) nicht erfasst hat, die Steuerungseinheit (22) für den Betrieb des Arms (12) einen Betrieb des Arms (22) in der Betriebsrichtung erneut startet oder den Arm (12) mit einer normalen Geschwindigkeit betreibt.

7. Robotersystem (1) nach einem der Ansprüche 1 bis 6,
wobei die Einheit (21) zur Erkennung eines sich bewegenden Objekts auf der Grundlage eines von einer Kamera aufgenommenen Bildes erkennt, ob sich ein sich bewegendes Objekt in dem Betriebsrichtungsbereich befindet, der entsprechend einer Betriebsrichtung des Arms (12) eingestellt ist.

## Revendications

1. Un système de robot (1) comprenant:
une unité de commande (22) de fonctionnement de bras configurée pour commander un fonctionnement d'un bras (12); et
une unité de détection (21) d'objets en mouvement configurée pour détecter si un objet en mouvement est dans une zone de direction de fonctionnement établie selon une direction de fonctionnement du bras (12) et dans une zone de fonctionnement du bras (12),
dans lequel le système de robot (1) comprend en outre:
une unité de surveillance (25) de zone de position d'objet mobile (25) configurée pour surveiller si l'objet mobile se trouve dans une zone de position d'objet mobile définie en dehors d'une zone de fonctionnement du bras (12),
dans lequel l'unité de commande (22) pour le fonctionnement du bras est configurée pour faire fonctionner le bras (12) à une première vitesse de fonctionnement lorsque l'unité de détection (21) d'objets en mouvement a détecté l'objet en mouvement;
dans lequel l'unité de commande (22) de fonctionnement du bras est configurée pour faire fonctionner le bras (12) à une deuxième vitesse de fonctionnement qui est différente de la première vitesse de fonctionnement du bras (12) lorsque l'unité de détection (21) d'objet mobile n'a pas détecté l'objet mobile et l'unité de surveillance (25) de zone de position d'objet mobile a détecté l'objet mobile;
dans lequel l'unité de commande (22) pour le fonctionnement du bras est configurée pour faire fonctionner le bras (12) à la première vitesse de fonctionnement lorsque l'unité de détection (21) d'objet en mouvement n'a pas détecté l'objet en mouvement et l'unité de surveillance (25) de zone de position d'objet en mouvement n'a pas détecté l'objet en mouvement.

2. Le système de robot (1) selon la revendication 1,
dans lequel la zone de direction de fonctionnement est réglée pour comprendre une position cible d'au moins un bras (12) décrite dans un programme définissant un fonctionnement du bras (12).

3. Le système de robot (1) selon la revendication 2,
dans lequel la zone de direction de fonctionnement est réglée en récupérant à l'avance une position cible d'au moins un bras (12) décrite dans le programme définissant un fonctionnement du bras (12) à partir d'une étape en cours d'un programme exécutant un fonctionnement du bras (12).

4. Le système de robot (1) selon l'une quelconque des revendications 1 à 3, comprenant en outre
une unité de transmission d'alerte (23) configurée pour transmettre une alerte,
l'unité de transmission d'alerte (23) transmettant l'alerte lorsque l'unité de détection (21) de l'objet mobile a détecté l'objet mobile.

5. Le système de robot (1) selon l'une quelconque des revendications 1 à 3,
dans lequel, lorsque l'unité (21) de détection de l'objet en mouvement a détecté l'objet en mouvement, l'unité (22) de commande du fonctionnement du bras (12) arrête un fonctionnement du bras (12) ou fait fonctionner le bras (12) à une faible vitesse.

6. Le système de robot (1) selon la revendication 5,
dans lequel, lorsqu'un fonctionnement du bras (12) est arrêté ou lorsque le bras (12) fonctionne à une faible vitesse et que l'unité de détection (21) d'objet mobile n'a pas détecté l'objet mobile dans une direction de fonctionnement du bras (12), l'unité de commande (22) de fonctionnement du bras redémarre un fonctionnement du bras (12) dans la direction de fonctionnement ou fait fonctionner le bras (12) à une vitesse normale.

7. Le système de robot (1) selon l'une quelconque des revendications 1 à 6,
dans lequel l'unité de détection (21) d'objet en mouvement détecte si un objet en mouvement est dans la zone de direction de fonctionnement réglée en fonction d'une direction de fonctionnement du bras (12) sur la base d'une image prise par une caméra.
